(19) Europäisches Patentamt / European Patent Office / Office européen des brevets

(11) **EP 3 904 293 A1**

(12) **EUROPEAN PATENT APPLICATION**
published in accordance with Art. 153(4) EPC

(43) Date of publication:
**03.11.2021 Bulletin 2021/44**

(21) Application number: **20759668.5**

(22) Date of filing: **13.02.2020**

(51) Int Cl.:
**C01G 23/053** $^{(2006.01)}$

(86) International application number:
**PCT/JP2020/005463**

(87) International publication number:
**WO 2020/170918 (27.08.2020 Gazette 2020/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2019 JP 2019027728**

(71) Applicant: **Showa Denko K.K.**
**Tokyo 105-8518 (JP)**

(72) Inventors:
• **CHIKAMI Hideaki**
**Toyama-shi, Toyama 931-8577 (JP)**
• **MIZUE Kei**
**Toyama-shi, Toyama 931-8577 (JP)**
• **KOGOI Hisao**
**Toyama-shi, Toyama 931-8577 (JP)**

(74) Representative: **Strehl Schübel-Hopf & Partner**
**Maximilianstrasse 54**
**80538 München (DE)**

(54) **TITANIUM OXIDE PRODUCTION METHOD**

(57) The present invention provides a method of producing titanium oxide capable of maintaining a high content of an anatase form crystal phase at a low cost even under a high temperature environment. The method of producing titanium oxide includes a step of synthesizing titanium oxide by using an aqueous solution obtained by dissolving titanium tetrachloride and an $\alpha$-hydroxycarboxylic acid having 3 carboxy groups as a reaction liquid and bringing the reaction liquid to a reaction temperature of 60°C or higher and the boiling point of the reaction liquid or lower, wherein the ratio of the amount (mol) of the $\alpha$-hydroxycarboxylic acid to the amount (mol) of Ti in the reaction liquid is 0.006 or more and 0.017 or less, and the concentration of Ti in the reaction liquid is 0.07 mol/L or more and 0.70 mol/L or less.

EP 3 904 293 A1

**Description**

TECHNICAL FIELD

The present invention relates to a method of producing titanium oxide, and more particularly to a method of producing titanium oxide by a liquid phase method.

This application claims priority under Japanese Patent Application No. 2019-027728 filed February 19, 2019, the contents of which are incorporated herein.

BACKGROUND ART

In recent years, since titanium dioxide ($TiO_2$) is a chemically stable material, it is industrially used as a white pigment in a wide range of fields. Further, anatase form fine particle titanium oxide having a large specific surface area is required in order to realize a higher function in these applications.

An industrial method for obtaining anatase form fine particle titanium oxide mainly includes a gas phase method and a liquid phase method. As the gas phase method, Patent Document 1 describes a method of reacting a titanium halide gas with an acidic gas.

As the liquid phase method, Patent Document 2 describes a method which includes adding a carboxylic acid such as acetic acid, oxalic acid or formic acid to an aqueous solution containing titanium tetrachloride, and neutralizing hydrochloric acid generated during the synthesis of titanium oxide with ammonia.

In addition, Patent Document 3 describes a method which includes adding metal elements, or Si, and P during synthesizing titanium oxide from titanyl sulfate in a liquid phase. Patent Document 4 discloses a method for synthesizing titanium oxide from titanium tetrachloride by a liquid phase method in which citric acid is added to a titanium tetrachloride aqueous solution and the resulting solution is dropped into hot water.

Patent Document 5 describes, in Example 1, a method of producing a titanium oxide powder, which includes a step of adding citric anhydride to a titanium tetrachloride aqueous solution, raising the temperature to 92°C, holding the solution for 30 minutes, cooling the solution to 70°C, and neutralizing the solution with ammonia water. Patent Document 5 discloses that the titanium oxide obtained by this method is fired at 500°C for 2 hours, and the rutile content in the titanium oxide after the firing is 8%.

Non-Patent Document 1 discloses a method which includes dissolving titanium n-butoxide (TNB) in toluene in a test tube, setting the test tube in an autoclave, providing water between the test tube and the wall surface of the autoclave, reacting the mixture at 300°C, and dissolving the evaporated water in toluene to hydrolyze TNB.

[Patent Document]

[Patent Document 1] Japanese Unexamined Patent Application, First Publication No. 2015-27924
[Patent Document 2] Japanese Unexamined Patent Application, First Publication No. 2011-63496
[Patent Document 3] Japanese Unexamined Patent Application, First Publication No.H07-267641
[Patent Document 4] Japanese Unexamined Patent Application, First Publication No. 2017-114700
[Patent Document 5] WO 2016/002755

[Non-Patent Documents]

[Non-Patent Documents 1] H. Kominami et al., "Hydrolysis of Titanium Alkoxide in Organic Solvent at High Temperatures: A New Synthetic Method for Nanosized, Thermally Stable Titanium (IV) Oxide", Industrial & Engineering Chemistry Research, 1999, vol. 38, p. 3925-3931.

SUMMARY OF THE INVENTION

[Problems to be Solved by the Invention]

Three crystal structures of $TiO_2$ are known: anatase, brookite, and rutile. Especially, anatase form titanium oxide containing a large amount of anatase crystal phase is noticed as a dielectric raw material, a solar cell electrode or a photocatalyst raw material. For example, when barium titanate $BaTiO_3$ as a dielectric raw material is synthesized, anatase form titanium oxide having high reactivity with a Ba source as a raw material is preferred.

A synthetic method of $BaTiO_3$ includes a solid phase method of reacting barium carbonate and titanium oxide.

In this method, it is necessary to carry out the reaction at 600°C to 700°C, and therefore, anatase form titanium oxide, in which the rutile conversion rate is low and grain growth is difficult in this temperature range, is required.

However, in the method described in Patent Document 1, it is necessary to react a titanium halide gas at a high temperature in order to obtain titanium oxide, and the produced titanium oxide is transformed to a rutile phase. Further, since the reaction is carried out at a high temperature, there is a problem that the particles are sintered and grain growth occurs and the particles of titanium oxide become larger.

In the method described in Patent Document 2, since the hydrochloric acid component generated by hydrolysis is neutralized with a base to generate a salt, a large-scale equipment is required for washing process to remove the salt, and it is considered that a large amount of waste liquid is generated. Therefore, the producing method described in Patent Document 2 is expensive.

In the method described in Patent Document 3, it is difficult to remove sulfate ions, and a high cost is required for sufficient removal of the sulfate ions. Further, a compound containing a metal element, Si, P or the like is added in the producing process, and in order to remove components derived from these, the cost becomes higher, and the case is the same as in Patent Document 2. In particular, since in the application of the dielectric raw material, the metal must be sufficiently removed from the titanium oxide, , the producing cost further increases.

In the titanium oxide obtained by the producing method described in Patent Document 4, almost all of the anatase crystal structure is lost under a high temperature environment of 700°C as described in Comparative Example 18 later.

In addition, in the titanium oxide obtained by the producing method described in Patent Document 5, almost all of the anatase crystal phase is lost under a high temperature environment of 700°C as in Comparative Example 19 described later.

In the producing method described in Non-Patent Document 1, since the pressure in the autoclave reaches 10 MPa by the self-generated pressure of vaporized water, a large reaction vessel that can withstand high pressure is required for mass production, and as a result, the equipment becomes too large. Therefore, in the producing method described in this document, the producing cost in mass production is very high.

Accordingly, it is an object of the present invention to provide a method of producing titanium oxide which can maintain a high content of an anatase crystal phase in a crystal phase even in a high-temperature environment at a low cost.

[Means for Solving Problems]

The structure of the present invention for solving the above problems is as follows.

[1] A method of producing titanium oxide, the method comprises a step of synthesizing titanium oxide by using an aqueous solution in which titanium tetrachloride and an $\alpha$-hydroxycarboxylic acid having 3 carboxy groups are dissolved as a reaction liquid and bringing the reaction liquid to a reaction temperature of 60°C or higher and a boiling point of the reaction liquid or lower,

wherein a ratio of an amount (mol) of the $\alpha$-hydroxycarboxylic acid to an amount (mol) of Ti in the reaction liquid is 0.006 or more and 0.017 or less;
a Ti concentration of the reaction liquid is 0.07 mol/L or more and 0.70 mol/L or less;
when the Ti concentration of the reaction liquid is 0.07 mol/L or more and less than 0.20 mol/L, the reaction temperature is 60 to 75°C;
when the Ti concentration of the reaction liquid is 0.20 mol/L or more and less than 0.45 mol/L, the reaction temperature is 65°C or more and the boiling point of the reaction liquid or lower; and
when the Ti concentration of the reaction liquid is 0.45 mol/L or more and 0.70 mol/L or less, the reaction temperature is 60 to 75°C.

[2] The method of producing the titanium oxide according to [1], wherein the $\alpha$-hydroxycarboxylic acid is citric acid.

[3] A method of producing titanium oxide, the method comprises a step of synthesizing titanium oxide by using an aqueous solution in which titanium tetrachloride and an $\alpha$-hydroxycarboxylic acid having two carboxy groups are dissolved as a reaction liquid and bringing the reaction liquid to a reaction temperature of 60°C or higher and a boiling point of the reaction liquid or lower,

wherein a ratio of an amount (mol) of the $\alpha$-hydroxycarboxylic acid to an amount (mol) of Ti in the reaction liquid is 0.034 or more and 0.065 or less;
a Ti concentration of the reaction liquid is 0.07 mol/L or more and 0.70 mol/L or less;
when the Ti concentration of the reaction liquid is 0.07 mol/L or more and less than 0.20 mol/L, the reaction temperature is 60 to 75°C.

when the Ti concentration of the reaction liquid is 0.20 mol/L or more and 0.45 mol/L or less, the reaction temperature is 65°C or more and the boiling point of the reaction liquid or lower; and

when the Ti concentration of the reaction liquid is 0.45 mol/L or more and 0.70 mol/L or less, the reaction temperature is 60 to 75°C.

[4] The method of producing titanium oxide according to [3], wherein the α-hydroxycarboxylic acid is tartaric acid or malic acid.

[5] The method of producing titanium oxide according to any one of [1] to [4], wherein the method further comprises a dilution step of obtaining the reaction liquid by diluting an aqueous solution of titanium tetrachloride and the α-hydroxycarboxylic acid in a concentration of 10 % by mass or more as a precursor aqueous solution prior to the synthesizing step with water.reaction liquid

[6] The method of producing titanium oxide according to [5], wherein the method further comprises a step of preparing the aqueous solution of titanium tetrachloride and the α-hydroxycarboxylic acid as the precursor aqueous solution by mixing an aqueous solution of titanium tetrachloride having a Ti concentration of 10 % by mass or more with the α-hydroxycarboxylic acid prior to the dilution step.

[7] The method of producing titanium oxide according to [5] or [6], wherein the dilution step is performed by adding water to the precursor aqueous solution.

[8] The method of producing titanium oxide according to any one of [5] to [7], wherein the precursor aqueous solution is held at 35°C or lower until the dilution step is started.

[9] The method of producing titanium oxide according to any one of [5] to [8], wherein in the dilution step, a temperature of water used for dilution is lower than the reaction temperature; and in the synthesizing step, the reaction liquid is heated to the reaction temperature.

[10] The method of producing titanium oxide according to [9], wherein in the synthesizing step, the reaction liquid is heated at a temperature rise rate of 0.1 to 1.5°C/min.

[11] The method of producing titanium oxide according to any one of [1] to [10], wherein the reaction liquid is held at the reaction temperature for 0.5 hours or more.

[Effect of the Invention]

The disclosure provides a method of producing titanium oxide which can maintain a high content of an anatase crystal phase in a crystal phase even under a high-temperature environment at a low cost.

BRIEF DESCRIPTION OF DRAWINGS

FIG. 1 is a flow diagram illustrating an example of a method of producing titanium oxide according to an embodiment of the present invention.

FIG. 2 is a graph showing the change in anatase content in the crystalline phase of titanium oxide after a heat test at 700°C relative to the ratio R of amount of acid to amount of Ti when citric acid is used as an α-hydroxycarboxylic acid having 3 carboxy groups.

FIG. 3 is a graph showing the change in anatase content in the crystalline phase of titanium oxide after a heat test at 700°C relative to the ratio R of amount of acid to amount of Ti when tartaric acid is used as an α-hydroxycarboxylic acid having two carboxy groups.

FIG. 4 is a graph showing the change in the anatase content in the crystalline phase of titanium oxide after a heat test at 700°C relative to the ratio R of amount of acid to amount of Ti when malic acid is used as the alpha-hydroxycarboxylic acid having two carboxy groups.

DETAILED DESCRIPTION OF THE INVENTION

Hereinafter, the titanium oxide according to the embodiment of the present invention and the method of producing the same will be described, but the present invention is not limited to the following embodiments.

Here, the term "titanium oxide" refers to titanium oxide (IV) ($TiO_2$) unless otherwise specified. The term "Ti" refers to all titanium atoms constituting a compound, ion, complex, etc., unless otherwise specified. The term "Ti concentration" refers to the concentration of all titanium atoms constituting a compound, an ion containing titanium, a complex, etc.

<1. Titanium Oxide>

A content of the anatase crystal phase in the whole crystal phase of the titanium oxide (Hereinafter, anatase content in the crystal phase may be used.) obtained by the production method of this disclosure is 95 % by mass or more, preferably 98 % by mass or more, and most preferably 100 % by mass.

<2. Method of Producing Titanium Oxide>

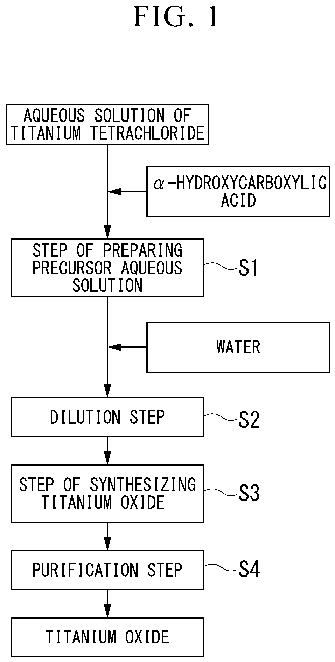

FIG. 1 is a flow chart showing an example of a method of producing titanium oxide according to an embodiment of the present invention. The method of producing titanium oxide includes a preparing step S1 for preparing an aqueous solution of titanium tetrachloride and α-hydroxycarboxylic acid as a precursor aqueous solution, a dilution step S2 for diluting the precursor aqueous solution with water to obtain a solution as a reaction liquid, a synthesizing step S3 for synthesizing titanium oxide from the reaction liquid, and a purification step S4 for purifying the synthesized titanium oxide. The producing method of the present disclosure is not limited to the examples described herein. For example, the preparing step S1 may not be included when the precursor aqueous solution is available; and for example, the preparing step S1 and the dilution step S2 may not be included when the reaction liquid is available. Each step will be described below.

<2-1. Preparing Step S1>

In the preparing step S1, an aqueous solution of titanium tetrachloride is mixed with an α-hydroxycarboxylic acid having three or two carboxy groups in the molecule, and the aqueous solution of titanium tetrachloride and the α-hydroxycarboxylic acid is prepared as a precursor aqueous solution. As a mixing method, it is preferable to add α-hydroxycarboxylic acid at one time while stirring the aqueous titanium tetrachloride solution, because there is no difference in reaction conditions between the start and the end of the addition. In order to obtain a sufficiently uniform aqueous solution, a mixing step is preferably performed by stirring for 3 minutes or more, more preferably for 5 minutes or more, and still more preferably for 8 minutes or more.

Examples of the α-hydroxycarboxylic acid having 3 carboxy groups in the molecule include citric acid, isocitric acid, 1,2-dihydroxy-1,1,2-ethanetricarboxylic acid and the like. Citric acid is preferably used, because it is easy to obtain and easy to handle and it has cost advantageous.

Examples of the α-hydroxycarboxylic acid having two carboxy groups in the molecule include tartaric acid, malic acid, tartronic acid, citramalic acid and the like. Tartaric acid or malic acid is preferably used, because it is easy to obtain and easy to handle and it has cost advantageous.

It is preferable that the precursor aqueous solution obtained in the preparing step S1 is held at 35°C or lower until the dilution step described later is started, and it is more preferable that the aqueous titanium tetrachloride solution and the precursor aqueous solution in the preparing step S1 are held at 35°C or lower. This is because the formation of amorphous titanium oxide is suppressed by suppressing the progress of hydrolysis of titanium tetrachloride in the state of high Ti concentration. From this viewpoint, the holding temperature is preferably 30°C or less, and more preferably 25°C or less.

The Ti concentration in the titanium tetrachloride aqueous solution is 10 % by mass or more, preferably 12 % by mass or more, and more preferably 14 % by mass or more. This is because titanium tetrachloride is prevented from reacting with water to form titanium hydroxide sol during the storage period.

The Ti concentration in the titanium tetrachloride aqueous solution is preferably 20 % by mass or less, more preferably 18 % by mass or less, and still more preferably 16 % by mass or less. This is because that the progress of hydrolysis reaction during storage of titanium tetrachloride aqueous solution is suppressed.

It is preferable that the amount of α-hydroxycarboxylic acid added is such that the value of {amount of α-hydroxycarboxylic acid (mol)}/{amount of Ti (mol)}) in the precursor aqueous solution is within the range of the ratio R in the reaction liquid to be described later.

In this step, the α-hydroxycarboxylic acid may be added as an aqueous solution to the titanium tetrachloride aqueous solution. However, in this case, in order to suppress the formation of the titanium hydroxide sol, it is necessary to prevent the concentration of Ti in the precursor aqueous solution from being greatly reduced. Specifically, the Ti concentration in the precursor aqueous solution is preferably 10 % by mass or more, more preferably 12 % by mass or more, and still more preferably 14 % by mass or more.

<2-2 Dilution Step S2>

In the dilution step S2, the precursor aqueous solution is diluted with water so that the Ti concentration C (Hereinafter, in order to distinguish the Ti concentration before dilution from the Ti concentration after dilution, the latter is referred to as "Ti concentration after dilution" or simply as "Ti concentration C".) is 0.07 to 0.70 mol/L. The precursor aqueous solution is an aqueous solution having a Ti concentration of 10 % by mass or more, in which titanium tetrachloride and $\alpha$-hydroxycarboxylic acid are dissolved. In one example of the producing method shown in FIG. 1, the aqueous solution obtained in the preparing step S1 is used as the precursor aqueous solution. When an aqueous solution satisfying the conditions as the precursor aqueous solution in terms of the Ti concentration and the $\alpha$-hydroxycarboxylic acid concentration can be obtained in advance, the preparing step S1 need not be performed.

In the dilution, water may be added to the precursor aqueous solution, or the precursor aqueous solution may be added to water. The diluted aqueous solution is used as the reaction liquid. Since the Ti concentration C (I.E., Ti concentration after dilution) in the reaction liquid is related to the reaction temperature T in the subsequent titanium oxide-synthesizing step S3, the relationship between the Ti concentration C and the reaction temperature T; and the preferred range of the Ti concentration C will be described later in the section for explaining the titanium oxide-synthesizing step S3.

In the dilution step S2, it is preferable to add water to the precursor aqueous solution. This is because the Ti concentration of the aqueous solution during dilution does not fall below the Ti concentration C of the aqueous solution after dilution, and it is considered that the reaction between titanium tetrachloride and water can be suppressed without using a special device. In addition, a rapid temperature change of a compound containing Ti in an aqueous solution can be suppressed, and the need for precise temperature control can be avoided.

In the dilution step S2, the temperature of the water added to the precursor aqueous solution is not particularly limited, but is preferably 70°C or less, and more preferably 60°C or less. The temperature of the water added to the precursor aqueous solution is preferably 5°C or more, more preferably 10°C or more.

The water used here is preferably pure water or ion-exchanged water in order to reduce impurities to be removed in the titanium oxide purification step S4, which will be described later, but it is not limited to this if the impurities can be removed in the purification step S4.

<2-3. Titanium Oxide-Synthesizing Step S3>

In a titanium oxide-synthesizing step S3, a reaction liquid which is an aqueous solution in which titanium tetrachloride and an $\alpha$-hydroxycarboxylic acid are dissolved is set to a reaction temperature T [°C] of 60°C or higher and the boiling point of the reaction liquid or lower to synthesize titanium oxide, and titanium oxide particles are precipitated.

The range of the ratio R of amount of $\alpha$-hydroxycarboxylic acid to amount of Ti (molar ratio ={amount of $\alpha$-hydroxycarboxylic acid (mol)}/{amount of Ti (mol)}) in the reaction liquid before the start of the reaction depends on the number of carboxy groups contained in the $\alpha$-hydroxycarboxylic acid used. If the ratio R is within the range described below, the titanium oxide produced can maintain a high anatase content in the crystalline phase even in a high temperature environment. In addition, since the ratio R is not too large, the fine particles of titanium oxide having a large BET specific surface area can be produced by dispersing the produced titanium oxide particles well.

When the $\alpha$-hydroxycarboxylic acid has 3 carboxy groups in the molecule, the value of the ratio R is 0.017 or less, preferably 0.013 or less, and more preferably 0.012 or less. When the $\alpha$-hydroxycarboxylic acid has 3 carboxy groups in the molecule, the ratio R is 0.006 or more, preferably 0.008 or more, and more preferably 0.009 or more.

When the $\alpha$-hydroxycarboxylic acid has 2 carboxy groups in the molecule, the ratio R is 0.065 or less, preferably 0.056 or less, more preferably 0.050 or less, and still more preferably 0.048 or less. When the $\alpha$-hydroxycarboxylic acid has 2 carboxy groups in the molecule, the ratio R is 0.034 or more, preferably 0.039 or more, and more preferably 0.044 or more.

In one example of the producing method shown in FIG. 1, the aqueous solution obtained in the dilution step S2 is used as the reaction liquid. When a reaction liquid having a Ti concentration and a ratio R in the range of (a) to (c) described below relative to the reaction temperature T is available, the preparing step S1 and the dilution step S2 need not be performed. The Ti concentration C of the reaction liquid is 0.07 mol/L or more and 0.70 mol/L or less, and the conditions of the reaction temperature T with respect to the Ti concentration C are as follows (a) to (c).

(a) When the Ti concentration C is 0.07 mol/L or more and less than 0.20 mol/L, the reaction temperature T is 60 to 75°C.
(b) When the Ti concentration C is 0.20 mol/L or more and less than 0.45 mol/L, the reaction temperature T is 75°C or more and the boiling point of the reaction liquid or lower. When the reaction proceeds, titanium oxide is precipitated and the concentration of solute in the reaction liquid decreases, so that the boiling point of the reaction liquid decreases. When the reaction temperature T is used as the boiling point of the reaction, in this step, it is preferable to use a method in which the amount of water in the reaction liquid can be kept constant, such as reflux.
(c) When the Ti concentration C is 0.45 mol/L or more and 0.70 mol/L or less, the reaction temperature T is 60 to 75°C.

Among the conditions (a) to (c), (b) or (c) is preferable, and (b) is more preferable. Among (b), the Ti concentration C of the reaction liquid is preferably 0.20 to 0.40 mol/L, more preferably 0.25 to 0.40 mol/L, and still more preferably 0.25 to 0.35 mol/L. The reaction temperature T in (b) is preferably 80°C or more, more preferably 90°C or more, and still more preferably 100°C or more.

When the temperature of the water used for dilution is lower than the reaction temperature T and the temperature of the reaction liquid before this step is lower than the reaction temperature T, the reaction liquid is heated. In view of productivity, it is preferable to heat the reaction liquid quickly. However, in order to suppress the precipitation of amorphous titanium oxide and improve the crystallinity, it is preferable to suppress the rapid progress of the reaction and to suppress the temperature rise rate so as to sufficiently grow the crystal. Therefore, a step of heating the reaction liquid to reach the target temperature, that is, the reaction temperature T, is preferably carried out at a temperature rise rate of 0.1°C/min to 1.5°C/min, more preferably at 0.3°C/min to 1.0°C/min, and still more preferably at 0.6°C/min to 1.0°C/min.

It is experimentally known that the reaction for producing titanium oxide from the reaction liquid is an endothermic reaction. Therefore, in order to maintain the above temperature by suppressing the lowering of the temperature rise rate and the lowering of the temperature during heating, it is preferable to cover the periphery of the reaction vessel with a heat insulating material or the like and uniformly heat the reactor with a heater capable of adjusting the amount of heat supplied, such as a mantle heater, a steam jacket or the like.

In this step, after the heating is completed and the temperature of the reaction liquid reaches the reaction temperature T, the reaction liquid is preferably held at the reaction temperature T for 0.5 hours or more. This is because the components is sufficiently reacted in the reaction liquid. From this viewpoint, the retention time of the reaction temperature T is more preferably 1 hour or more, and more preferably 1.5 hours or more. However, considering productivity, the reaction time should be short. Therefore, the retention time of the reaction temperature is preferably 5 hours or less, more preferably 3 hours or less, and still more preferably 2 hours or less. In this step, the reaction liquid is preferably stirred.

<2-4. Titanium Oxide Purification Step S4>

In the synthesizing step S3, titanium oxide is precipitated in the reaction liquid to obtain a slurry. In the titanium oxide purification step S4, impurities such as Cl, S and C, or the like, in the slurry are removed to improve the purity of the titanium oxide. One or more of an ultrafiltration membrane, a reverse osmosis membrane, an ion exchange resin, and an electrodialysis membrane may be used as the purification method.

The purified titanium oxide may be ground if necessary. The grinding method is not particularly limited, and for example, a method using a mortar, a ball mill or the like can be used.

EXAMPLES

Examples of the present invention will be described below, but the present invention is not limited to these Examples.

<1. Examples>

<1-1. Examples 1 to 5 and Comparative Examples 1 to 10>

(Precursor Aqueous Solution-Preparing Step S1)

To a titanium tetrachloride aqueous solution x [g] having a Ti concentration of 15 % by mass (titanium tetrachloride concentration of 59 % by mass) and maintained at 20°C, citric acid monohydrate was added. An aqueous solution (precursor aqueous solution) of titanium tetrachloride and citric acid was prepared in which the ratio of the amount of citric acid to the amount of Ti, R {amount of citric acid (mol)}/{amount of Ti (mol)}), was 0.010. In the precursor aqueous solution-preparing step S1, the temperature of the aqueous solution containing Ti was always kept at 20°C.

(Dilution Step S2)

To the prepared precursor aqueous solution at 20°C, 400 mL of ion exchange water at 20°C was added, and the mixture was stirred for 10 minutes and diluted to a Ti concentration of C [mol/L], and as a result, 4 kinds of reaction liquids having different Ti concentrations were prepared. The relationship between the amount of titanium tetrachloride aqueous solution x [g] used and the Ti concentration C [mol/L] of the reaction liquid is as follows. Dilution with water does not change the ratio R.

C = 0.60 mol/L for x = 90 g
C = 0.32 mol/L for x = 45 g
C = 0.10 mol/L for x = 13 g
C = 0.04 mol/L for x = 5.2 g

(Synthesizing Step S3 of Titanium Oxide)

The reaction liquid was transferred to a glass reactor. While stirring the reaction liquid in the reactor at 300 rpm using a magnet stirrer, the reaction liquid was heated to a target temperature, that is, the reaction temperature T [°C] by using an external heater at a temperature rise rate of 0.6°C/min, and held at the reaction temperature T [°C] for 2 hours. The reaction temperatures T [°C] in each Example and each Comparative Example are shown in Table 1.

(Purification Step S4)

The resulting slurry was then allowed to cool to room temperature (25°C). The cooled slurry was neutralized with ammonia water, filtered and recovered with an ultrafiltration membrane ("Microza UF (registered trademark)" manufactured by Asahi Kasei Corporation, which is identical in the following Examples and Comparative Examples.), and the resulting solid was washed with ion-exchanged water. The washed solid was placed in an oven and dried at 60°C to give a solid of titanium oxide. The solid was pulverized in a mortar to obtain titanium oxide powder.

The anatase content (% by mass) in the crystalline phase of the obtained titanium oxide before and after the heating test at 700°C is shown in Table 1. Details of the heating test and the measuring method of the anatase content in the crystal phase will be described later.

[Table 1]

| | | Producing condition | | | | | Before heating test | | | After heating test | | |
|---|---|---|---|---|---|---|---|---|---|---|---|---|
| | Acid used | Temperature of ion-exchanged water [°C] | Dilution method | Ratio R (acid [mol] /Ti [mol]) | Ti concentration C after dilution [mol/L] | Reaction temperature T[°C] | Content in crystalline phase [% by mass] | | | Content in crystalline phase [% by mass] | | |
| | | | | | | | Anatase | Rutile | Brookite | Anatase | Rutile | Brookite |
| Example 1 | Citric acid | 20 | Method (1)(*1) | 0.010 | 0.60 | 70 | 100.0 | 0.0 | 0.0 | 44.0 | 56.0 | 0.0 |
| Example 2 | Citric acid | 20 | Method (1) | 0.010 | 0.32 | 70 | 100.0 | 0.0 | 0.0 | 21.8 | 78.2 | 0.0 |
| Example 3 | Citric acid | 20 | Method (1) | 0.010 | 0.32 | 100 | 100.0 | 0.0 | 0.0 | 86.0 | 14.0 | 0.0 |
| Example 4 | Citric acid | 20 | Method (1) | 0.010 | 0.32 | 80 | 100.0 | 0.0 | 0.0 | 50.3 | 49.7 | 0.0 |
| Example 5 | Citric acid | 20 | Method (1) | 0.010 | 0.10 | 70 | 100.0 | 0.0 | 0.0 | 78.0 | 22.0 | 0.0 |
| Comparative Example 1 | Citric acid | 20 | Method (1) | 0.010 | 0.60 | 100 | 100.0 | 0.0 | 0.0 | 15.9 | 84.1 | 0.0 |
| Comparative Example 2 | Citric acid | 20 | Method (1) | 0.010 | 0.60 | 55 | 100.0 | 0.0 | 0.0 | 0.0 | 100.0 | 0.0 |
| Comparative Example 3 | Citric acid | 20 | Method (1) | 0.010 | 0.32 | 55 | 100.0 | 0.0 | 0.0 | 0.0 | 100.0 | 0.0 |
| Comparative Example 4 | Citric acid | 20 | Method (1) | 0.010 | 0.32 | 40 | 100.0 | 0.0 | 0.0 | 0.0 | 100.0 | 0.0 |
| Comparative Example 5 | Citric acid | 20 | Method (1) | 0.010 | 0.10 | 55 | 100.0 | 0.0 | 0.0 | 0.0 | 100.0 | 0.0 |
| Comparative Example 6 | Citric acid | 20 | Method (1) | 0.010 | 0.10 | 100 | 100.0 | 0.0 | 0.0 | 1.5 | 98.5 | 0.0 |
| Comparative Example 7 | Citric acid | 20 | Method (1) | 0.010 | 0.10 | 80 | 100.0 | 0.0 | 0.0 | 9.3 | 90.7 | 0.0 |
| Comparative Example 8 | Citric acid | 20 | Method (1) | 0.010 | 0.04 | 100 | 100.0 | 0.0 | 0.0 | 1.6 | 98.4 | 0.0 |

(continued)

| | Producing condition | | | | | | Before heating test | | | After heating test | | |
|---|---|---|---|---|---|---|---|---|---|---|---|---|
| | Acid used | Temperature of ion-exchanged water [°C] | Dilution method | Ratio R (acid [mol] /Ti [mol]) | Ti concentration C after dilution [mol/L] | Reaction temperature T[°C] | Content in crystalline phase [% by mass] | | | Content in crystalline phase [% by mass] | | |
| | | | | | | | Anatase | Rutile | Brookite | Anatase | Rutile | Brookite |
| Comparative Example 9 | Citric acid | 20 | Method (1) | 0.010 | 0.04 | 70 | 100.0 | 0.0 | 0.0 | 3.2 | 96.8 | 0.0 |
| Comparative Example 10 | Citric acid | 20 | Method (1) | 0.010 | 0.04 | 55 | 100.0 | 0.0 | 0.0 | 0.0 | 100.0 | 0.0 |
| Example 6 | Citric acid | 30 | Method (1) | 0.010 | 0.32 | 100 | 100.0 | 0.0 | 0.0 | 100.0 | 0.0 | 0.0 |
| Example 7 | Citric acid | 40 | Method (1) | 0.010 | 0.32 | 100 | 100.0 | 0.0 | 0.0 | 100.0 | 0.0 | 0.0 |
| Example 8 | Citric acid | 50 | Method (1) | 0.010 | 0.32 | 100 | 100.0 | 0.0 | 0.0 | 95.0 | 5.0 | 0.0 |
| * 1: Method (1) = Water is added to the precursor aqueous solution. | | | | | | | | | | | | |

<1-2. Examples 6 to 8>

The titanium oxide powder of Examples 6 to 8 were obtained in the same manner as in Example 3 except that 400 mL of ion-exchanged water at the temperature shown in Table 1 was added to the precursor aqueous solution at 20°C in the dilution step S2. The anatase content (% by mass) in the crystalline phase of the obtained titanium oxide before and after the heating test at 700°C is shown in Table 1.

<1-3. Examples 9 to 13, Comparative Examples 11 to 13>

In each of Examples 9 to 13 and Comparative Examples 11 to 13, with respect to the producing method of Example 3, a titanium oxide powder was obtained by setting the ratio R of the amount of citric acid (the number 3 of carboxy groups) to the amount of Ti to a value shown in Table 2 (That is, citric acid was not added in Comparative Example 11.). The Example 9 is the same as the Example 3.

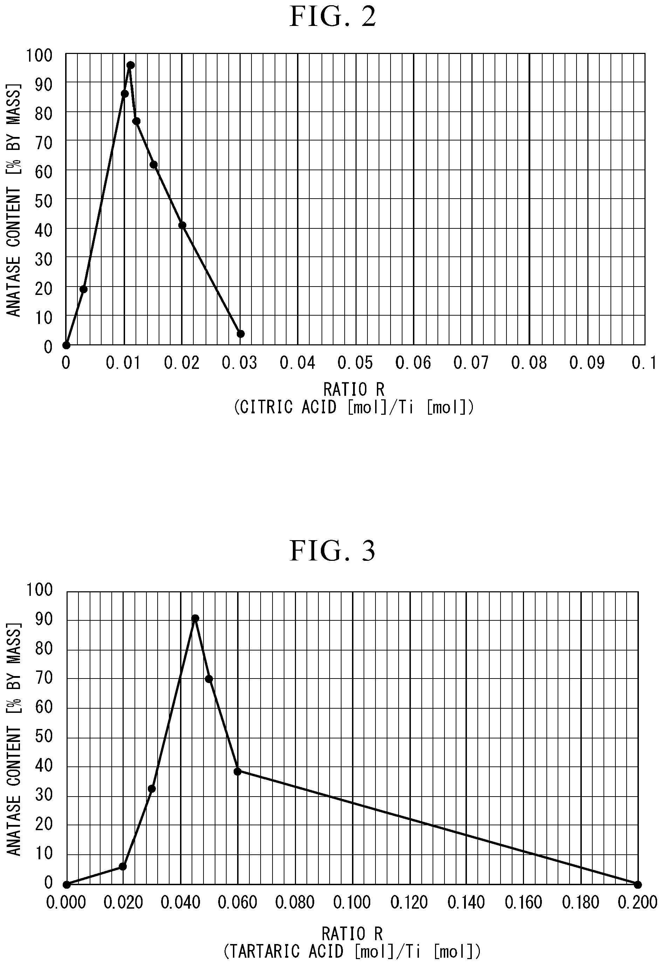

The anatase content (% by mass) in the crystalline phase of the obtained titanium oxide before and after the heating test at 700°C is shown in Table 2. FIG. 2 is a graph showing the change in the content of anatase in the crystalline phase of titanium oxide after the heating test at 700°C relative to the ratio R when citric acid is used as the acid and the Ti concentration C of the reaction liquid is 0.32 mol/L. Details of the heating test and the measuring method of the anatase content in the crystal phase will be described later.

[Table 2]

| | Producing condition | | | | | | Before heating test | | | After heating test | | |
|---|---|---|---|---|---|---|---|---|---|---|---|---|
| | Acid used | Temperature of ion-exchanged water [°C] | Dilution method | Ratio R (acid [mol] /Ti [mol]) | Ticoncentration C after dilution [mol/L] | Reaction temperature T[°C] | Content in crystalline phase [% by mass] | | | Content in crystalline phase [% by mass] | | |
| | | | | | | | Anatase | Rutile | Brookite | Anatase | Rutile | Brookite |
| Example 9 | Citric acid | 20 | Method (1)(*1) | 0.010 | 0.32 | 100 | 100 | 0.0 | 0.0 | 86.0 | 14.0 | 0.0 |
| Example 10 | Citric acid | 20 | Method (1) | 0.011 | 0.32 | 100 | 100 | 0.0 | 0.0 | 95.8 | 4.2 | 0.0 |
| Example 11 | Citric acid | 20 | Method (1) | 0.012 | 0.32 | 100 | 100 | 0.0 | 0.0 | 76.8 | 23.2 | 0.0 |
| Example 12 | Citric acid | 20 | Method (1) | 0.015 | 0.32 | 100 | 100 | 0.0 | 0.0 | 62.0 | 38.0 | 0.0 |
| Example 13 | Citric acid | 20 | Method (1) | 0.020 | 0.32 | 100 | 100 | 0.0 | 0.0 | 41.0 | 59.0 | 0.0 |
| Comparative Example 11 | - | 20 | Method (1) | 0 | 0.32 | 100 | 100 | 0.0 | 0.0 | 0.0 | 100 | 0.0 |
| Comparative Example 12 | Citric acid | 20 | Method (1) | 0.003 | 0.32 | 100 | 100 | 0.0 | 0.0 | 19.0 | 81.0 | 0.0 |
| Comparative Example 13 | Citric acid | 20 | Method (1) | 0.030 | 0.32 | 100 | 100 | 0.0 | 0.0 | 3.9 | 96.1 | 0.0 |
| Comparative Example 14 (*3) | Citric acid | 75 | Method (2)(*2) | 0.010 | 0.088 | 75 | 100 | 0.0 | 0.0 | 0.0 | 100 | 0.0 |
| Comparative Example 15 (*4) | Citric acid | - | - | 0.012 | 1.25 | 92 | 100 | 0.0 | 0.0 | 0.0 | 100 | 0.0 |
| Example 14 | Tartaric acid | 20 | Method (1) | 0.030 | 0.32 | 100 | 100 | 0.0 | 0.0 | 32.8 | 67.2 | 0.0 |
| Example 15 | Tartaric acid | 20 | Method (1) | 0.045 | 0.32 | 100 | 100 | 0.0 | 0.0 | 90.9 | 9.1 | 0.0 |

| | Producing condition | | | | | | Before heating test | | | After heating test | | |
|---|---|---|---|---|---|---|---|---|---|---|---|---|
| | Acid used | Temperature of ion-exchanged water [°C] | Dilution method | Ratio R (acid [mol] /Ti [mol]) | Ti concentration C after dilution [mol/L] | Reaction temperature T[°C] | Content in crystalline phase [% by mass] | | | Content in crystalline phase [% by mass] | | |
| | | | | | | | Anatase | Rutile | Brookite | Anatase | Rutile | Brookite |
| Example 16 | Tartaric acid | 20 | Method (1) | 0.050 | 0.32 | 100 | 100 | 0.0 | 0.0 | 70.1 | 29.9 | 0.0 |
| Example 17 | Tartaric acid | 20 | Method (1) | 0.060 | 0.32 | 100 | 100 | 0.0 | 0.0 | 38.5 | 61.5 | 0.0 |
| Comparative Example 16 | Tartaric acid | 20 | Method (1) | 0.020 | 0.32 | 100 | 100 | 0.0 | 0.0 | 5.9 | 94.1 | 0.0 |
| Comparative Example 17 | Tartaric acid | 20 | Method (1) | 0.20 | 0.32 | 100 | 100 | 0.0 | 0.0 | 0.0 | 100 | 0.0 |
| Example 18 | Malic acid | 20 | Method (1) | 0.030 | 0.32 | 100 | 100 | 0.0 | 0.0 | 48.8 | 51.2 | 0.0 |
| Example 19 | Malic acid | 20 | Method (1) | 0.040 | 0.32 | 100 | 100 | 0.0 | 0.0 | 63.1 | 36.9 | 0.0 |
| Example 20 | Malic acid | 20 | Method (1) | 0.045 | 0.32 | 100 | 100 | 0.0 | 0.0 | 84.4 | 15.6 | 0.0 |
| Example 21 | Malic acid | 20 | Method (1) | 0.060 | 0.32 | 100 | 100 | 0.0 | 0.0 | 80.3 | 19.7 | 0.0 |
| Example 22 | Malic acid | 20 | Method (1) | 0.080 | 0.32 | 100 | 100 | 0.0 | 0.0 | 32.3 | 67.7 | 0.0 |
| Comparative Example 18 | Malic acid | 20 | Method (1) | 0.003 | 0.32 | 100 | 100 | 0.0 | 0.0 | 0.0 | 100 | 0.0 |
| Comparative Example 19 | Malic acid | 20 | Method (1) | 0.010 | 0.32 | 100 | 100 | 0.0 | 0.0 | 0.6 | 99.4 | 0.0 |
| Comparative Example 20 | Malic acid | 20 | Method (1) | 0.015 | 0.32 | 100 | 100 | 0.0 | 0.0 | 7.8 | 92.2 | 0.0 |

(continued)

| | Producing condition | | | | | | Before heating test | | | After heating test | | |
|---|---|---|---|---|---|---|---|---|---|---|---|---|
| | Acid used | Temperature of ion-exchanged water [°C] | Dilution method | Ratio R (acid [mol] /Ti [mol]) | Ticoncentration C after dilution [mol/L] | Reaction temperature T[°C] | Content in crystalline phase [% by mass] | | | Content in crystalline phase [% by mass] | | |
| | | | | | | | Anatase | Rutile | Brookite | Anatase | Rutile | Brookite |
| Comparative Example 21 | Malic acid | 20 | Method (1) | 0.20 | 0.32 | 100 | 100 | 0.0 | 0.0 | 0.0 | 100 | 0.0 |

* 1: Method (1) = Water is added to the precursor aqueous solution. *2: Method (2) = Precursor aqueous solution was added to water
*3: Comparative Example 9 is based on the method of Example 8 in Patent Document 4.
*4: Comparative Example 11 is based on the method of Example 1 in Patent Document 5.

<1-4. Comparative Example 14>

In Comparative Example 14, titanium oxide was synthesized in the same manner as in Example 8 described in Patent Document 4. Citric acid monohydrate was added to a titanium tetrachloride aqueous solution having a Ti concentration of 18 % by mass (titanium tetrachloride concentration of 71 % by mass) while keeping the temperature at 20°C, and the ratio R of the amount of citric acid to the amount of Ti was set to 0.01 to prepare the precursor aqueous solution. 20 g of a precursor aqueous solution at 20°C was added dropwise to 850 mL of ion exchange water at 75°C while keeping the temperature of the side to which the precursor aqueous solution is added at 75°C (Ti concentration after dropping is 0.088 mol/L). After dropping, the aqueous solution was immediately cooled to 20°C. After cooling, the aqueous solution was neutralized with ammonia water, the precipitate was filtered and recovered with an ultrafiltration membrane, washed with ion-exchanged water, and dried in an oven at 80°C to obtain titanium oxide powder.
The content of anatase in the crystalline phase of the obtained titanium oxide was 100 % by mass. When the titanium oxide was subjected to a heating test at 700°C to be described later, the anatase content [% by mass] in the crystalline phase after the heating test was 0.0 % by mass (Table 2).

<1-5. Comparative Example 15>

Titanium oxide was prepared based on the method described in Example 1 of Patent Document 5. While holding a titanium tetrachloride aqueous solution of 100 g/L in terms of $TiO_2$ (Ti concentration 1.25 mol/L) at 25°C, citric acid monohydrate of 3 % by mass in terms of anhydrous citric acid based on the weight of titanium tetrachloride contained in the aqueous solution in terms of titanium oxide (ratio R: 0.012) was added and stirred for 30 minutes. The obtained aqueous solution is used as a precursor aqueous solution. The aqueous solution was then heated using an external heater and stirred at 92°C for 30 minutes. Thereafter, the obtained solution was cooled to 70°C, and the pH was adjusted to 6.5 with ammonia solution (ammonia concentration: 25 % by mass).
The resulting slurry was then cooled to 25°C, filtered through an ultrafiltration membrane, and the recovered titanium oxide was washed with ion-exchanged water. The washed titanium oxide was placed in an oven and dried at 60°C.
The content of anatase in the crystalline phase of the obtained titanium oxide was 100 % by mass. When the titanium oxide was subjected to a heating test at 700°C to be described later, the anatase content [% by mass] in the crystalline phase after the heating test was 0.0 % by mass (Table 2).

<1-6. Examples 14 to 17, Comparative Examples 16 to 17>

With respect to Examples 9 to 13 and Comparative Examples 11 to 13, tartaric acid (number 2 of carboxy groups) was used instead of citric acid, titanium oxide powder was obtained using the ratio R as the value shown in Table 2 for each of Examples 14 to 17 and Comparative Examples 16 to 17. The anatase content (% by mass) in the crystalline phase of the obtained titanium oxide before and after the heating test at 700°C is shown in Table 2. FIG. 3 is a graph showing the change in the content of anatase in the crystalline phase of titanium oxide after the heating test at 700°C with respect to the ratio R when tartaric acid is used as the acid and the Ti concentration C of the reaction liquid is 0.32 mol/L. Here, the data of Comparative Example 11 was used for the content of anatase in the crystal phase at the ratio R = 0.

<1-7. Examples 18 to 22, Comparative Examples 18 to 21>

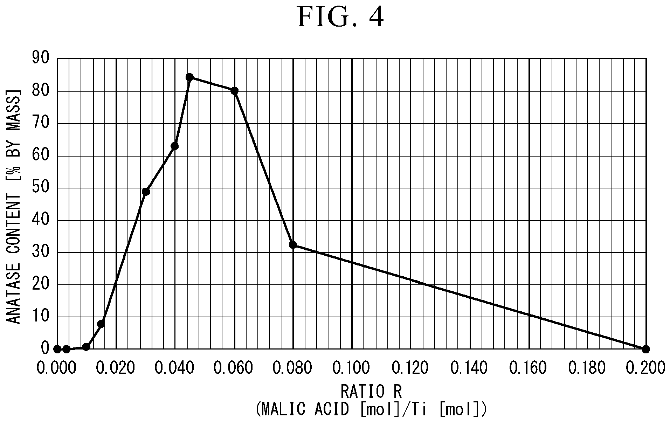

With respect to Examples 9 to 13 and Comparative Examples 11 to 1, malic acid (number 2 of carboxy groups) was used instead of citric acid, titanium oxide powder was obtained using the ratio R as the value shown in Table 2 for Example 18 to 22 and Comparative Example 18 to 21. The anatase content (% by mass) in the crystalline phase of the obtained titanium oxide before and after the heating test at 700°C is shown in Table 2. FIG. 4 is a graph showing the change in the content of anatase in the crystalline phase of titanium oxide after the heating test at 700°C with respect to the ratio R when malic acid is used as the acid and the Ti concentration C of the reaction liquid is 0.32 mol/L. Here, the data of Comparative Example 11 was used for the content of anatase in the crystal phase at the ratio R = 0.

<2. Evaluation Method>

<2-1. HeatingTest>

The titanium oxide obtained in each of the above Examples and Comparative Examples was subjected to a heating test as follows. First, 2 g of the obtained titanium oxide powder was placed in an alumina crucible, heated at a constant rate from 25°C to 700°C for 2 hours in an electric furnace under an atmosphere, and left at 700°C for 2 hours.

Thereafter, the alumina crucible containing the titanium oxide powder was taken out of the electric furnace and allowed to cool at room temperature (25°C). Titanium oxide before and after the heating test was evaluated as follows.

<2-2. Measurement of the Content of Each Crystalline Phase>

The X-ray diffraction measurement was carried out on each titanium oxide before and after the heating test as follows, and the ratio of each crystal phase of anatase, rutile and brookite contained in the crystal phase of titanium oxide was calculated. X- ray powder diffraction measurements were carried out using the X'pert PRO manufactured by PANalytical Co. The X-ray diffraction measurements were carried out, using copper target Cu-K$\alpha$1 wire, at a tube voltage of 45 kV, a tube current of 40 mA, a measurement range of 2$\theta$ = 20 to 35 deg, a sampling width of 0.0167 deg, and a scanning speed of 0.0192 deg/s.

In the measurement, the diffraction pattern of the sample was corrected by measuring the background only in the glass cell and subtracting the diffraction intensity of the background from the diffraction intensity measured in the sample including the titanium oxide and the glass cell. The diffraction intensity of titanium oxide after background correction (for example, the pattern of FIG. 3) is obtained by I (2$\theta$) = Is (2$\theta$) - I$_B$ (2$\theta$), wherein I$_S$ (2$\theta$) is the diffraction intensity at 2$\theta$ of a sample containing titanium oxide and a glass cell; and I$_B$ (2$\theta$) is a diffraction intensity I$_B$ (2$\theta$) at 2$\theta$ of only the glass cell.

The ratio of each crystalline phase of titanium oxide before and after the heating test was calculated by the following equation.

$$\text{Content of anatase in the crystalline phase (\% by mass)} = I_a / (I_a + I_r + I_b)$$

wherein I$_a$ is the intensity of the peak (2$\theta$ = 25.3°) corresponding to the anatase crystalline phase; I$_r$ is the intensity of the peak (2$\theta$ = 27.4°) corresponding to the rutile crystal phase; and I$_b$ is the intensity of the peak (2$\theta$ = 31.5°) corresponding to the brookite crystalline phase.

<3. Evaluation Results>

The producing conditions and evaluation results of the titanium oxide produced in each example and comparative example are shown in Tables 1 to 2 and FIGs. 2 to 4.

<3-1. Reaction Temperature T and Ti Concentration C of Reaction Liquid>

From Table 1, in the case of synthesizing titanium oxide through the preparing step S1, the dilution step S2, and the synthesizing step S3, in order to obtain titanium oxide in which an anatase crystal phase remains even under a high temperature environment, the reaction temperature T in the synthesizing step S3 must be 60°C or more. Further, when the Ti concentration C (the diluted Ti concentration C) of the reaction liquid is 0.07 mol/L or more and 0.70 mol/L or less, it can be seen that the anatase form crystalline phase remains in the produced titanium oxide even in a high-temperature environment.

Further, when the relationship between the Ti concentration C of the reaction liquid and the reaction temperature T satisfies any one of the following (a) to (c), titanium oxide capable of maintaining a high content of the anatase form crystal phase even in a high temperature environment can be obtained.

(a) When the Ti concentration C of the reaction liquid is 0.07 mol/L or more and less than 0.20 mol/L, the appropriate reaction temperature T is 60 to 75°C.
(b) When the Ti concentration C of the reaction liquid is 0.20 mol/L or more and less than 0.45 mol/L, the appropriate reaction temperature T is 75°C or more and the boiling point of the reaction liquid or lower.
(c) When the Ti concentration C of the reaction liquid is 0.45 mol/L or more and 0.70 mol/L or less, the appropriate reaction temperature T is 60 to 75°C.

<3-2. Addition Amount of Acid When Citric Acid Was Used As Acid>

From Table 2 and FIG. 2, it can be seen that when citric acid having 3 carboxy groups was used as the acid, titanium oxide which can maintain a high content of anatase form crystal phase even in a high temperature environment can be obtained if the ratio R of the amount of the acid to the amount of the Ti is 0.006 or more and 0.017 or less.

<3-3. Addition Amount of Acid When Tartaric Acid or Malic Acid Was Used As Acid>

From Table 2 and FIG. 3 to 4, when tartaric acid or malic acid having 2 carboxy groups is used as the acid, if the ratio R between the amount of the acid and the amount of the Ti is 0.034 or more and 0.065 or less, titanium oxide which can maintain a high content of the anatase form crystal phase even in a high temperature environment can be obtained.

<3-4. Producing Method of Examples>

In any of the methods for producing titanium oxide of the above Examples, it is not necessary to apply high pressure to the reaction system, and too large-scale equipment is not required for mass production. Therefore, when the titanium oxide is produced on the basis of the production method of the embodiment, the titanium oxide can be obtained at low cost and capable of maintaining a high content of the anatase crystal phase in the crystal phase even under a high temperature environment.

**Claims**

1.   A method of producing titanium oxide, the method comprises a step of synthesizing titanium oxide by using an aqueous solution in which titanium tetrachloride and an $\alpha$-hydroxycarboxylic acid having 3 carboxy groups are dissolved as a reaction liquid and bringing the reaction liquid to a reaction temperature of 60°C or higher and a boiling point of the reaction liquid or lower,

   wherein a ratio of an amount (mol) of the $\alpha$-hydroxycarboxylic acid to an amount (mol) of Ti in the reaction liquid is 0.006 or more and 0.017 or less;
   a Ti concentration of the reaction liquid is 0.07 mol/L or more and 0.70 mol/L or less;
   when the Ti concentration of the reaction liquid is 0.07 mol/L or more and less than 0.20 mol/L, the reaction temperature is 60 to 75°C;
   when the Ti concentration of the reaction liquid is 0.20 mol/L or more and less than 0.45 mol/L, the reaction temperature is 65°C or more and the boiling point of the reaction liquid or lower; and
   when the Ti concentration of the reaction liquid is 0.45 mol/L or more and 0.70 mol/L or less, the reaction temperature is 60 to 75°C.

2.   The method of producing titanium oxide according to claim 1, wherein the $\alpha$-hydroxycarboxylic acid is citric acid.

3.   A method of producing titanium oxide, the method comprises a step of synthesizing titanium oxide by using an aqueous solution in which titanium tetrachloride and an $\alpha$-hydroxycarboxylic acid having two carboxy groups are dissolved as a reaction liquid and bringing the reaction liquid to a reaction temperature of 60°C or higher and a boiling point of the reaction liquid or lower,

   wherein a ratio of an amount (mol) of the $\alpha$-hydroxycarboxylic acid to an amount (mol) of Ti in the reaction liquid is 0.034 or more and 0.065 or less;
   a Ti concentration of the reaction liquid is 0.07 mol/L or more and 0.70 mol/L or less;
   when the Ti concentration of the reaction liquid is 0.07 mol/L or more and less than 0.20 mol/L, the reaction temperature is 60 to 75°C;
   when the Ti concentration of the reaction liquid is 0.20 mol/L or more and 0.45 mol/L or less, the reaction temperature is 65°C or more and the boiling point of the reaction liquid or lower; and
   when the Ti concentration of the reaction liquid is 0.45 mol/L or more and 0.70 mol/L or less, the reaction temperature is 60 to 75°C.

4.   The method of producing titanium oxide according to claim 3, wherein the $\alpha$-hydroxycarboxylic acid is tartaric acid or malic acid.

5.   The method of producing titanium oxide according to any one of claims 1 to 4, wherein the method further comprises a dilution step of obtaining the reaction liquid by diluting an aqueous solution of titanium tetrachloride and the $\alpha$-hydroxycarboxylic acid in a concentration of 10 % by mass or more as a precursor aqueous solution prior to the synthesizing step with water.

6.  The method of producing titanium oxide according to claim 5, wherein the method further comprises a step of preparing the aqueous solution of titanium tetrachloride and the α-hydroxycarboxylic acid as the precursor aqueous solution by mixing an aqueous solution of titanium tetrachloride having a Ti concentration of 10 % by mass or more with the α-hydroxycarboxylic acid prior to the dilution step.

7.  The method of producing titanium oxide according to claim 5 or 6, wherein the dilution step is performed by adding water to the precursor aqueous solution.

8.  The method of producing titanium oxide according to any one of claims 5 to 7, wherein the precursor aqueous solution is held at 35°C or lower until the dilution step is started.

9.  The method of producing titanium oxide according to any one of claims 5 to 8, wherein in the dilution step, a temperature of water used for dilution is lower than the reaction temperature; and
    in the synthesizing step, the reaction liquid is heated to the reaction temperature.

10. The method of producing titanium oxide according to claim 9, wherein in the synthesizing step, the reaction liquid is heated at a temperature rise rate of 0.1 to 1.5°C/min.

11. The method of producing titanium oxide according to any one of claims 1 to 10, wherein the reaction liquid is held at the reaction temperature for 0.5 hours or more.

# FIG. 1

```
┌─────────────────────────────┐
│    AQUEOUS SOLUTION OF       │
│  TITANIUM TETRACHLORIDE      │
└─────────────────────────────┘
              │
              │        ┌─────────────────────────┐
              ◄────────│  α-HYDROXYCARBOXYLIC     │
              │        │         ACID             │
              │        └─────────────────────────┘
              ▼
┌─────────────────────────────┐
│    STEP OF PREPARING         │
│   PRECURSOR AQUEOUS          │───S1
│       SOLUTION               │
└─────────────────────────────┘
              │
              │        ┌─────────────────────────┐
              ◄────────│         WATER            │
              │        └─────────────────────────┘
              ▼
┌─────────────────────────────┐
│      DILUTION STEP           │───S2
└─────────────────────────────┘
              │
              ▼
┌─────────────────────────────┐
│   STEP OF SYNTHESIZING       │───S3
│      TITANIUM OXIDE          │
└─────────────────────────────┘
              │
              ▼
┌─────────────────────────────┐
│     PURIFICATION STEP        │───S4
└─────────────────────────────┘
              │
              ▼
┌─────────────────────────────┐
│      TITANIUM OXIDE          │
└─────────────────────────────┘
```

# FIG. 2

ANATASE CONTENT [% BY MASS] vs RATIO R (CITRIC ACID [mol]/Ti [mol])

# FIG. 3

ANATASE CONTENT [% BY MASS] vs RATIO R (TARTARIC ACID [mol]/Ti [mol])

## FIG. 4

## INTERNATIONAL SEARCH REPORT

| International application No. |
|---|
| PCT/JP2020/005463 |

**A. CLASSIFICATION OF SUBJECT MATTER**

Int. Cl. C01L23/053(2006.01)i
FI: C01G23/053

According to International Patent Classification (IPC) or to both national classification and IPC

**B. FIELDS SEARCHED**

Minimum documentation searched (classification system followed by classification symbols)
Int. Cl. C01G23/053

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)
JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 11-171544 A (SHOWA DENKO KABUSHIKI KAISHA) 29 | 1-4, 11 |
| A | June 1999, paragraphs [0005]-[0008], example 5 | 5-10 |
| X | WO 2016/002755 A1 (ISHIHARA SANGYO KAISHA, LTD.) | 1, 2, 11 |
| A | 07 January 2016, paragraphs [0014], [0015], example 14 | 3-10 |
| A | JP 2017-114700 A (SHOWA DENKO KABUSHIKI KAISHA) 29 June 2017, entire text | 1-11 |
| A | JP 4-280816 A (SANYO COLOR WORKS KK) 06 October 1992, entire text | 1-11 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31.03.2020 | 14.04.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2020/005463 |

| Patent Documents referred to in the Report | Publication Date | Patent Family | Publication Date |
|---|---|---|---|
| JP 11-171544 A | 29.06.1999 | US 6610135 B1<br>description, column 3, lines 10-59, example 5<br>WO 2000/010921 A1<br>EP 1127844 A1<br>CN 1324329 A | |
| WO 2016/002755 A1 | 07.01.2016 | US 2017/0137301 A1<br>paragraphs [0070]-[0074], example 14<br>EP 3165509 A1<br>CN 106536415 A<br>KR 10-2017-0024073 A | |
| JP 2017-114700 A | 29.06.2017 | US 2018/0237311 A1<br>entire text<br>WO 2017/111150 A1<br>EP 3393976 A1<br>KR 10-2018-0077220 A<br>CN 108367938 A | |
| JP 4-280816 A | 06.10.1992 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019027728 A
- JP 2015027924 A
- JP 2011063496 A
- JP H07267641 A
- JP 2017114700 A
- WO 2016002755 A

**Non-patent literature cited in the description**

- **H. KOMINAMI et al.** Hydrolysis of Titanium Alkoxide in Organic Solvent at High Temperatures: A New Synthetic Method for Nanosized, Thermally Stable Titanium (IV) Oxide. *Industrial & Engineering Chemistry Research,* 1999, vol. 38, 3925-3931